(19) Europäisches Patentamt
European Patent Office
Office européen des brevets

(11) EP 0 761 048 B1

(12) EUROPEAN PATENT SPECIFICATION

(45) Date of publication and mention of the grant of the patent:
**09.07.2003 Bulletin 2003/28**

(21) Application number: **94922422.4**

(22) Date of filing: **22.04.1994**

(51) Int Cl.⁷: **H04J 3/16**, H04J 3/22, H04N 7/12, H04N 7/16, H04N 7/50, H04N 7/58

(86) International application number:
**PCT/US94/04421**

(87) International publication number:
**WO 95/029546 (02.11.1995 Gazette 1995/47)**

# (54) A SYSTEM FOR DYNAMICALLY ALLOCATING A SCARCE RESOURCE

VORRICHTUNG ZUR DYNAMISCHEN ZUWEISUNG BEGRENZT VERFÜGBARER MITTEL

SYSTEME D'ATTRIBUTION DYNAMIQUE D'UNE RESSOURCE DISPONIBLE EN FAIBLE QUANTITE

(84) Designated Contracting States:
**DE FR GB**

(43) Date of publication of application:
**12.03.1997 Bulletin 1997/11**

(73) Proprietor: **THOMSON CONSUMER ELECTRONICS, INC.**
**Indianapolis, IN 46290-1024 (US)**

(72) Inventor: **OZKAN, Mehmet, Kemal**
**Carmel, IN 46032 (US)**

(74) Representative: **Kohrs, Martin et al**
**Thomson multimedia**
**46, quai A. Le Gallo**
**92648 Boulogne Cedex (FR)**

(56) References cited:
**EP-A- 0 643 537**
**US-A- 4 713 776**
**US-A- 5 115 309**
**US-A- 5 134 476**
**US-A- 5 309 232**
**US-A- 5 534 926**

- **PROCEEDINGS OF THE SPIE - THE INTERNATIONAL SOCIETY FOR OPTICAL ENGINEERING, vol. 2188, 8 - 10 February 1994, USA, pages 153-162, XP002057147 REININGER D ET AL: "RATE CONTROL FOR VBR MPEG VIDEO ON LOCAL AREA NETWORKS"**

EP 0 761 048 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention is related to a system for dynamically allocating a scarce resource among several competing users in response to indications of need from the users.

## BACKGROUND OF THE INVENTION

It is often necessary for a scarce resource to be shared among several users. For example, a plurality of video signals from respective sources, which may be television network feeds, television stations, or other video sources, may be combined and transmitted over a satellite link for broadcast to respective television receivers in consumers' homes. An exemplary satellite link includes a digital transmission path capable of transmitting 24 megabits per second (Mbps). In order to maximize efficiency and utilization of such a link, it is necessary for several video signals to share the link. For example, it may be desired to share the above satellite transmission link among at least six video signal channels. In this case, the scarce resource is the bandwidth, or bit rate, in the satellite transmission link. This resource is shared in the transmission system by allocating some portion of the bandwidth or bit rate of the transmission link to each of the video signals.

One known method for performing the multiplexing function uses constant bit rate (CBR) encoders for each channel. In such a system, the video signal from each channel is supplied to a CBR encoder. A CBR encoder produces a digitally encoded bit stream, representing the video signal supplied to it, at a predetermined constant bit rate. To produce a constant bit rate signal, a CBR encoder continually modifies the number of quantizing levels into which the video signal is encoded. Using fewer quantizing levels requires fewer bits to represent those levels, and the overall number of bits required to represent the video signal is reduced. Conversely, using more quantizing levels requires more bits to represent those levels, and the overall number of bits required to represent the image is increased.

However, varying the quantization levels in an encoded signal representing an image effects a corresponding change in the quality of the image reproduced from the encoded signal. Using fewer quantization levels results in a lower quality reproduced image than using more quantization levels. Thus, in a CBR encoder, video signals representing spatially and/or temporally more complex images are encoded in such a manner that the quality of the reproduced image is lower than that of less complex images.

Because CBR encoders produce a constant bit rate, controlling the multiplexing of video signals from a plurality of such encoders is simplified. Each encoder is *a priori* allocated a bit rate representing its quota of the total available bit rate of the transmission link. One known allocation method allocates equal portions of the total bit rate of the transmission link to each encoder. However, video signals representing different program types inherently have differing complexities. For example, a video channel transmitting a basketball game has a much higher complexity than one transmitting a panel discussion. Thus, the quality of the image reproduced from the encoded video signal representing the basketball game will be lower (probably substantially lower) than that of the panel discussion.

Another known allocation method, which attempts to solve this problem, *a priori* allocates different bit rates to each CBR encoder based on the expected image complexity of the signal to be encoded. Thus, the channel transmitting a basketball game would be allocated a larger proportion of the total bit rate of the transmission link than the channel transmitting the panel discussion. Such an allocation method can result in the quality of the images reproduced from the encoded signals representing both the basketball game and the panel discussion being more nearly equal.

Yet another known allocation method allocates the proportion of the total bit rate of the transmission link to channels based on payment by the provider of the signal. The more the provider pays for the transmission of the channel, the greater the proportion of the total bit rate of the transmission link allocated to that channel, and the better the quality of the image reproduced from the encoded signal through that channel.

The article "Rate Control for VBR MPEG Video on Local Area Networks" in Proceedings of the SPIE - The International Society for Optical Engineering, vol.2188, 8-10 February 1994, USA, pp.153-162, discloses a rate control algorithm for delivery of digital video traffic on LANs that results on uniform video quality during normal traffic conditions and graceful degradation during periods of congestion. An encoded mode is selected based on buffer occupancy which is known to the encoders via explicit feedback congestion notification. During congestion periods, a joint rate control mechanism regulates the encoder's bit rate to achieve uniform quality among users and to bring the buffer to a normal occupancy level.

## BRIEF SUMMARY OF THE INVENTION

The inventor has realized, that the complexity of a video signal cannot always be specified *a priori*. For example, a news broadcast contains scenes of very low complexity, (e.g. a news reader sitting behind a desk reading news) interspersed with scenes of very high complexity (e.g. a video clip of a basketball game). If such a video channel were *a priori* allocated a high proportion of the total bit rate of the transmmion link, then the basketball game scene

would be reproduced with acceptable quality, but the news reader scene would be encoded with too high a quality, or, in other words, using more bits than are necessary. On the other hand, if such a video channel were allocated a lower proportion of the total bit rate of the transmission link, then the news reader scene would be reproduced with acceptable quality using a reasonable number of bits, but the allocated bit rate would be insufficient to reproduce the basketball game scene with acceptable quality.

The inventor further realized that each video source, on the average, may be characterized in the same manner as the above news broadcast. I.e. almost every video signal of commercial interest contains scenes of high complexity interspersed with scenes of low complexity. He also realized that the scenes of differing complexity are uncorrelated in time. Furthermore, he has found that, within any given frame period, the images of the different channels have differing complexities, and that these complexity variations are also uncorrelated in time.

It was found desirable that the scarce resource of transmission link bit rate be dynamically allocated based on a measure of need by each user. In the above example, it is desirable that bit rates be dynamically allocated to different channels based on the current image complexity of those channels. The complexity of the images currently being transmitted for all the channels are evaluated, and a proportion of the total bit rate of the transmission link is allocated to each channel corresponding in some manner to the relationship of the complexity of the current image of that channel to the overall complexity of the images of all the channels.

The invention enables to improve the quality of the encoded signals.

In accordance with principles of the present invention, a digital communications system is as defined in claim 1, and advantageously in conformity with any of claims 2 to 10. Preferably the system of the invention, for dynamically allocating a resource, includes a plurality of resource users and a resource having a maximum utilization level sharable among the plurality of resource users. A plurality of need analyzers, associated with respective resource users, dynamically generate respective signals, each representing the relative need for the resource by the associated resource user. A plurality of access controllers, associated with respective resource users, control access to the resource by the associated user in response to an allocation signal. A resource allocator dynamically generates allocation signals, representing allocated resource utilization levels for associated users, in response to the plurality of need representative signals from the need analyzers.

## BRIEF DESCRIPTION OF THE DRAWING

**Fig. 1** is a block diagram of a multiplexer system according to the present invention;

**Fig. 2** is a block diagram of a channel processor which may be used in the multiplexer system illustrated in Fig. 1;

**Fig. 3** is a block diagram of a portion of an MPEG encoder which may be used in the channel processor illustrated in Fig. 2;

**Fig. 4** is a block diagram of a bit rate allocator which may be used in the multiplexer system illustrated in Fig. 1;

**Fig. 5** is a more detailed block diagram of a regulator which may be used in the MPEG encoder illustrated in FIG. 3; and

**Figs 6, 7** and **8** are timing diagrams illustrating sampling of complexity information.

## DETAILED DESCRIPTION OF A PREFERRED EMBODIMENT

Fig. 1 is a block diagram of a multiplexer system incorporating the present invention. In Fig. 1, all signal paths are illustrated as single signal lines. However, one skilled in the art will understand that the illustrated signal paths could carry multibit digital signals, either in parallel, in which case the signal paths would be composed of multiple signal lines, or serially, in which case the signal paths could be a single data line and/or include a data and clock signal line. Other control and clock signal paths, not germane to the understanding of the present invention have been omitted from the figure to simplify it.

In Fig. 1 a plurality of input terminals 5 are coupled to sources (not shown) of video signals (CHANNEL 1 - CHANNEL K) which are to be transmitted together over a data link. The plurality of input terminals 5 are coupled to respective data input terminals of a corresponding plurality of channel processors 10. Respective data output terminals of the plurality of channel processors 10 are coupled to corresponding data input terminals 1 - K of a multiplexer (MUX) 20. A data output terminal of multiplexer 20 is coupled to an output terminal 15 of the multiplexer system. Output terminal 15 is coupled to utilization circuitry (not shown) for transmitting the multiplexed data stream (MUX'ED DATA) over the transmission link.

Each of the plurality of channel processors 10 further includes a complexity output terminal and a control input terminal. The respective complexity output terminals of each of the plurality of channel processors are coupled to corresponding complexity input terminals of a bit rate allocator 30, and respective quota output terminals of the bit rate

allocator 30 are coupled to the corresponding control input terminals of the plurality of channel processors 10.

In operation, each channel processor receives a signal at its control input terminal representing the bit rate allocated to it for the next quota period. The channel processor then encodes the signal at its data input terminal for the next quota period into a digitally encoded signal at the allocated bit rate. The encoded data signal is supplied to the corresponding input terminal of multiplexer 20. Multiplexer 20 operates in a known manner to combine the signals from all the channel processors into a multiplexed data stream. The multiplexed data stream is then supplied to the circuitry comprising the data link for transmission, also in a known manner.

During the encoding process, the channel processor 10 generates a signal at its complexity output terminal representing the coding complexity of the signal being encoded. The bit rate allocator 30 receives the signals from the complexity output terminals of the channel processors 10, and, based on all of the complexity signals, dynamically adjusts the bit rate quotas for the next quota period among the plurality of channel processors 10. In a preferred embodiment, more complex signals are dynamically allocated a relatively higher bit rate than less complex signals. Different methods of determining the complexity of the video signal and for allocating bit rates based on the complexities are described below.

Fig. 2 is a block diagram of a channel processor which may be used in the multiplexer system illustrated in Fig. 1. In Fig. 2, elements similar to those in Fig. 1 are designated by the same reference number, and are not described in detail below. In Fig. 2, a data input terminal 5 is coupled a video signal source (not shown). Data input terminal 5 is coupled to a data input terminal of a constant bit rate encoder (CBR) 14, and a complexity analyzer 16. A data output terminal of the CBR encoder 14 is coupled to an input terminal of multiplexer (MUX) 20 (of Fig. 1). A control input terminal (CONTROL) of the channel processor 10 is coupled to a quota input terminal Q of the CBR encoder 10. An output terminal of the complexity analyzer 16 is coupled to the complexity output terminal (COMPLEXITY) of the channel processor 10.

In operation, the complexity analyzer 16 analyzes the complexity of the video signal at the data input terminal 5. A signal is produced at the output terminal of the complexity analyzer 16 representative of the complexity of the input signal. The complexity representative signal is supplied to the bit rate allocator 30 (of Fig. 1). In response to this complexity signal (and those of the other channel processors 10), bit rate allocator 30 provides a signal to the control input terminal (CONTROL) of this channel processor 10 (and the other channel processors 10) representing the bit rate allocated to this channel processor 10. The CBR encoder 14 provides a data path between its data input and data output terminals for producing an output signal encoded at a constant bit rate. The constant bit rate is set in response to the signal at the quota input terminal Q from the control input terminal (CONTROL) of the channel processor 10 from the bit rate allocator 30.

It is possible that circuitry in the CBR encoder 14 can also be utilized by the complexity analyzer 16 in performing its analysis. In such a case, data is supplied from within the CBR encoder 14 directly to the complexity analyzer 16, as illustrated in phantom in Fig. 2. Such data from the CBR encoder 14 may supplement data from the input terminal 5, or replace it altogether, in which case there is no direct connection of the complexity analyzer to the data input terminal 5.

In a preferred embodiment, each CBR encoder 14 is an encoder which compresses and encodes a video signal in accordance with a standard promulgated by the Moving Picture Expert Group (MPEG), termed an MPEG encoder. Fig. 3 is a block diagram illustrating a portion of an MPEG encoder 14. The known components of the MPEG encoder 14 will not be described in detail below. MPEG encoders include other elements, not germane to an understanding of the present invention, which have been omitted from the figure to simplify it.

In Fig. 3, a data input terminal 5 (DATA IN) of MPEG encoder 14 is coupled to a source (not shown) of a video signal to be compressed and encoded. Input terminal 5 is coupled to an input terminal of a frame buffer 41. Frame buffer 41 includes a plurality of frame period buffers or delay lines and a plurality of output terminals producing respective signals representing portions of different, but temporally adjacent, frames or pictures. The plurality of output terminals of the frame buffer 41 are coupled to corresponding input terminals of a motion estimator 42. An output terminal of the motion estimator is coupled to a discrete cosine transform (DCT) circuit 43. An output terminal of DCT circuit 43 is coupled to a data input terminal of a variable quantizer (Qu) circuit 46. An output terminal of variable quantizer circuit 46 is coupled to an input terminal of a variable length coder (VLC) 47. An output terminal of VLC 47 is coupled to an input terminal of an output buffer 48. A data output terminal of output buffer 48 is coupled to a data output terminal (DATA OUT) of MPEG encoder 14. Data output terminal (DATA OUT) of MPEG encoder 14 is coupled to a corresponding input terminal of multiplexer 20 (of Fig. 1).

A status output terminal of output buffer 48 is coupled to a status input terminal of a bit rate regulator 49. A control output terminal of bit rate regulator 49 is coupled to a control input terminal of variable quantizer 46. A quota input terminal Q of MPEG encoder 14 is coupled to a corresponding quota output terminal of bit rate allocator 30. The quota input terminal Q of the MPEG encoder 14 is coupled to a control input terminal of regulator 49.

In operation, MPEG encoder 14 operates in a known manner to compress and encode the video signal at its input terminal for the next quota period at a bit rate determined by the signal at its Q input terminal. In the following

example, an MPEG encoder encoding a video signal partitioned into groups (GOPs) consisting of twelve pictures or frames is described. However, it should be understood that the number of pictures or frames in a GOP can vary. Also in the following example, it is assumed that the bit rate allocation for each MPEG encoder is updated once each GOP, i.e. the quota period is the GOP period. However, it should also be understood that the quota period may be different, and may even vary over time.

The frame buffer 41 receives and stores data representing the portion of the twelve frames in the exemplary GOP currently being encoded necessary to perform motion estimation, in a manner described below. This data is supplied to motion estimator 42. In the preferred embodiment, the first one of the twelve frames or pictures is used as a reference frame (I frame), and is passed through the motion estimator to DCT circuit 43. For the remainder of the frames, a motion vector is generated in motion estimator 42 for each one of a plurality of 16 pixel by 16 line blocks in each picture or frame, termed macroblocks in the MPEG standard document, either from preceding frames alone (P frames), or interpolated from both preceding and succeeding frames (B frames). As described above, frame buffer 41 holds the data necessary for the motion estimator to perform the estimation from preceding frames or the interpolation from preceding and succeeding frames. The generated motion vectors for a particular frame are then compared to the actual data in the frame being estimated and a motion difference signal is generated, and supplied to DCT circuit 43.

In the DCT circuit 43, the 16 pixel by 16 line macroblocks of spatial data from the I frame and motion difference signals from the P frames and B frames are divided into six 8 pixel by 8 line blocks (four luminance blocks, and two subsampled chrominance blocks) termed microblocks in the remainder of this application, in accordance with the MPEG standard document. A discrete cosine transform is performed on each microblock. The resulting 8 by 8 blocks of DCT coefficients are then supplied to variable quantizer 46. The 8 by 8 blocks of coefficients are quantized, scanned in a zig-zag order and supplied to VLC 47. The quantized DCT coefficients, and other side information (related to parameters of the encoded GOP), representing the GOP are encoded using run-length coding in the VLC 47, and supplied to output buffer 48.

It is known that the most direct way to control the output bit rate of VLC 47, and thus maintain the allocated constant bit rate for the MPEG encoder 14, is to control the number of quantizing levels (or, put another way, the quantizing step size) to be used for quantizing each block of DCT coefficients in the variable quantizer 46. The control signal supplied to the variable quantizer 46 from the bit rate regulator 49 performs this controlling function. Within a quota period, which is the period between successive bit rate quota update signals from the bit rate allocator 30 (of Fig. 1), the bit rate regulator 49, in known manner, supplies a control signal to the variable quantizer 46 which varies the number of levels into which each 16 by 16 macroblock in the GOP is being quantized in order to maintain the allocated bit rate for that quota period. The bit rate allocation for the bit rate regulator 49 in the present example is varied for each GOP period in response to the coding complexity values of the video signals in each of the plurality of channels, in a manner described below.

In a preferred embodiment, bit rate allocator 30 (of Fig. 1), is a computer system having connections coupled to various circuit components in the plurality 10 of channel processors. Fig. 4 is a block diagram of the hardware forming the bit rate allocator 30. In Fig. 4, a microprocessor (μP) 31 is coupled to a read/write memory (RAM) 32, a read-only memory (ROM) 33 and an input/output (I/O) controller 34 over a computer system bus 35. There are other components of the computer system, such as mass storage devices, and user terminals, which have not been illustrated in order to simplify the figure. The I/O controller 34 has a plurality of input terminals (COMPLEXITY) coupled to corresponding complexity output terminals of the plurality 10 of channel processors (of Fig. 1) and a plurality of output terminals (QUOTA) coupled to corresponding quota input terminals of the plurality 10 of channel processors.

The microprocessor 31, RAM 32, ROM 33 and I/O controller 34 operate as a computer system in known manner to execute programs stored in the ROM 33, store and retrieve data in the RAM 32 and receive data from and transmit data to the devices attached to the I/O controller 34. The data representing the current coding complexity of the video signals being encoded in the plurality 10 of channel processors (of Fig. 1) are received from the corresponding output terminals of those channel processors at the I/O controller 34 via the COMPLEXITY input terminals in a manner described below. The microprocessor 31 is notified of the receipt of this data in a known manner, e.g. polling, interrupt, etc. The microprocessor 31 retrieves those signals from the I/O controller 34 via the computer system bus 35, determines the quota of bits for the next quota period for each of the encoders, and supplies signals representing those quotas to the plurality 10 of channel processors via the QUOTA output terminals at the next quota period.

A preferred method for determining the coding complexity of a video signal being encoded by an MPEG encoder 14 (of Fig. 3) utilizes the quantization scale factor (designated $Q_{MB}$) for each 16 by 16 macroblock and the number of bits (designated $T_{MB}$) used to encode that macroblock, for all the macroblocks in each picture or frame of the GOP. Fig. 5 is a block diagram of bit rate regulator 49 of the MPEG encoder 14 (of Fig. 3) and the complexity analyzer 16 (of Fig. 2) which generates a coding complexity representative signal according to this method. Various clock and control signals have been omitted from Fig 5, to simplify it. However, what signals are required, and the necessary timing and voltage characteristics of these signals are well understood.

The complexity analyzer 16 illustrated in Fig. 5 is an example of a complexity analyzer utilizing information

from the CBR encoder 14 only, as illustrated in phantom in Fig. 2. In Fig. 5, bit rate regulator 49 has a status input terminal $T_{MB}$ coupled to the status output terminal of output buffer 48 (of Fig. 3). The control output terminal $Q_{MB}$ of bit rate regulator 49 is coupled to the control input terminal of variable quantizer 46 (of Fig. 3). Regulator 49 further has a control input terminal (Q) coupled to a corresponding quota output terminal of the bit rate allocator 30 (of Fig. 1).

The status input terminal $T_{MB}$ of the bit rate regulator 49 is also coupled to a first input terminal of a first adder 92. An output terminal of the first adder 92 is coupled to an input terminal of a first latch 93. An output terminal of the first latch 93 is coupled to a first input terminal of a multiplier 94 and a second input terminal of the first adder 92. An output terminal of the multiplier 94 is coupled to an input terminal of a second latch 95. An output terminal of the second latch 95 is coupled to a coding complexity output terminal $X_{pic}$. Complexity output terminal $X_{pic}$ is coupled a corresponding complexity input terminal of bit rate allocator 30 (of Fig. 1).

The control output terminal $Q_{MB}$ of bit rate regulator 49 is also coupled to a first input terminal of a second adder 96. An output terminal of the second adder 96 is coupled to an input terminal of a third latch 97. An output terminal of the third latch 97 is coupled to a numerator input terminal N of a divider 98 and to a second input terminal of the second adder 96. An output terminal of divider 98 is coupled to a second input terminal of the multiplier 94. A register 99 has an output terminal coupled to the denominator input terminal D of the divider 98.

In operation, for each macroblock, bit rate regulator 49 generates a quantizing scale factor signal $Q_{MB}$ for the variable quantizer 46, in a known manner, based on the current bit rate quota and the number of bits used to encode preceding pictures, and then receives a signal from the output buffer 48 indicating the number of bits $T_{MB}$ used to encode that macroblock. The variable quantizer 46 (of Fig. 3) quantizes the DCT coefficients in each macroblock in accordance with the quantizing scale factor $Q_{MB}$. The quantizing scale factor $Q_{MB}$ represents the quantizing step size, or percentage of the full dynamic range of the DCT coefficients in each quantizing level. A high value for $Q_{MB}$ means that there is a larger quantizing step size, and, consequently, fewer quantizing levels. Conversely, a low value for $Q_{MB}$ means that there is a smaller quantizing step size, and, consequently, more quantizing levels. In the preferred embodiment, $Q_{MB}$ is a five bit integer (having values between 1 and 31).

An average quantizing scale factor for all the macroblocks in a complete picture or frame (designated $\bar{Q}_{pic}$ is then calculated as follows. At the beginning of each frame or picture, latches 93 and 97 are cleared to zero in response to a clear signal (not shown). The combination of the second adder 96 and the third latch 97 operate as an accumulator to continually sum the macroblock quantizing scale factors $Q_{MB}$ from he bit rate regulator 49. At the same time, the combination of the first adder 92 and the first latch 93 operate as an accumulator to continually sum the number of bits used thus far to encode the frame or picture.

After all of the macroblocks in a frame or picture (a number designated $N_{MB}$) have been processed, latch 97 contains the sum of all of the macroblock quantizing scale factors $Q_{MB}$ produced by bit rate regulator 49, and latch 93 contains the sum of all the bits used to encode the picture or frame $T_{pic}$. The divider 98 produces the quotient of the sum of all the macroblock quantizing scale factors $Q_{MB}$ in the picture or frame, divided by the number of macroblocks in the picture or frame $N_{MB}$. This quotient is the average quantizing scale factor $\bar{Q}_{pic}$ for that frame or picture. The multiplier 94 produces the product of $\bar{Q}_{pic}$ and $T_{pic}$, which is the coding complexity for that picture (designated $X_{pic}$), i.e. $X_{pic} = T_{pic} \cdot \bar{Q}_{pic}$ . At the end of the picture or frame, the coding complexity signal $X_{pic}$ is latched into the second latch 95 in response to a clock signal (not shown). The above described cycle then repeats for each frame or picture in the video signal being encoded.

The coding complexity $X_{pic}$ is then supplied from latch 95 to a complexity input terminal of the I/O controller 34 of the bit rate allocator 30 (of Fig. 4) which performs the remaining processing to obtain the coding complexity for the GOP. The coding complexity for a GOP (designated $X_{GOP}$) is the sum of the $X_{pic}$'s for all of the pictures in that GOP. (See equation (1)). The µP 31 acts as an

$$X_{GOP} = \sum_{\text{all pics in GOP}} T_{pic} \cdot \bar{Q}_{pic} = \sum_{\text{all pics in GOP}} X_{pic} \qquad (1)$$

accumulator by retrieving each $X_{pic}$ value from the I/O controller 34, and summing them over all of the frames or pictures in the GOP.

The number of frames or pictures in a GOP (designated N) generally remains constant. While N is constant, $X_{GOP}$ can be calculated, on a sliding window basis, by adding the coding complexity value $X_{pic}$ of the latest picture, and subtracting the coding complexity value from the oldest picture in the GOP. In this case, an updated value of $X_{GOP}$ is available after each frame or picture. However, N can change. If N changes, then $X_{GOP}$ for the newly defined GOP must be calculated by summing the coding complexity values $X_{pic}$ from the new number of preceding pictures in the newly defined GOP, as in equation (1).

As described above, it is possible that different channels operate at different frame or picture rates, e.g. the standard video frame rate (in the U.S.) is 29.97 frames per second, for film images it is 24 frames per second, and for cartoons it is 15 frames per second. It is also possible that different channels have different numbers of pictures or frames in a GOP. Thus, it is possible that different channels have different GOP time periods. In order to accurately allocate bits to channels under such conditions, the GOP coding complexity values of the plurality of channels in such situations are time normalized in the bit rate allocator 30 by dividing the GOP complexity value from equation (1) for each channel by that channel's GOP time period (designated $GOP_{time}$). (See equation (2)). The normalized GOP coding complexity value

$$Xnorm_{GOP} = \frac{X_{GOP}}{GOP_{time}} \qquad (2)$$

(designated $Xnorm_{GOP}$) is then used to allocate bits among the different channels. The timing of the sampling of the complexity values, and the generation of quota values for such systems will be discussed in more detail below.

Referring back to Fig. 5, as described above, for each macroblock, bit rate regulator 49 generates a quantizing scale factor signal $Q_{MB}$ for variable quantizer 46, and then receives a signal from the output buffer 48 indicating the number of bits $T_{MB}$ used to encode that macroblock. These signals may alternatively be supplied directly to the I/O controller 34 in the bit rate allocator 30 (of Fig. 4). The µP 31 may then calculate the appropriate coding complexity measure (from equation (1) or equations (1) and (2)) internally.

Furthermore, in order to simplify the transmission, the coding complexity value for each picture $X_{pic}$ may be scaled. In a preferred embodiment, this value is scaled, after multiplier 94, into an eight bit number. This scaled value is then passed to the bit rate allocator 30 (of Fig. 4). It may also be desirable for the computer system to maintain a file of the picture complexity values $X_{pic}$, for example in a mass storage device (not shown), for other reasons, such as allowing recalculation of the coding complexity value in the event N changes. Storage of an hour of 8 bit $X_{pic}$ values will take 108 kilobytes (kB) for standard video and 86 kB for film.

In the discussion below, $X^i$ will represent the currently available appropriate one of either $X_{GOP}$ (if all channels have the same GOP time period) or $Xnorm_{GOP}$ from the $i^{th}$ channel processor. The bit rate allocator 30 (of Fig. 1) generates respective quota (Q) signals representing allocations of the available bits in the transmission link for the next quota period based on the coding complexity values $X^i$ from all of the K channel processors forming the plurality of channel processors 10. The predetermined transmission link bit rate from the output terminal of the multiplexer 20 (of Fig. 1) (designated R) is allocated among the plurality 10 of channel processors, so that the $i^{th}$ channel processor receives a bit rate allocation designated $R^i$.

One method for allocating bit rates in the transmission link to the different channels is a linear allocation based on the currently available coding complexity $X^i$ of the preceding GOP period (on a sliding window basis, as discussed above) for all of the plurality 10 of channel processors (of Fig. 1). In this method, each processor i receives the same proportion $R^i$ of the total bit capacity R as the coding complexity of that encoder $X^i$ bears to the total coding complexity of all the encoders. (See equation (3)).

$$R^i = \frac{X^i}{\sum_{j=1}^{K} X^j} R \qquad (3)$$

However, it has been found that there is a lower bit rate allocation below which the quality of a reproduced image drops precipitously. In addition, in the illustrated embodiment, the bit rate allocations for the next quota period depends upon the complexity measures from the preceding GOP. Thus, if there is a scene change from a simple image to a complex image, there may be insufficient bits allocated to encode the new, complex, scene because the allocation for the new scene was based on the preceding, simple, scene.

An alternative method for allocating bit rates in the transmission link to different channels guarantees a minimum bit rate allocation $RG^i$ to each encoder i, and allocates the remaining bits linearly, as in equation (3). (See equation (4)). Each channel

$$R^i = RG^i + \frac{X^i}{\sum_{j=1}^{K} X^j} [R - \sum_{j=1}^{K} RG^j] \quad (4)$$

may have a different guaranteed minimum bit rate depending upon the anticipated overall complexity of the video transmitted through the channel and/or pricing of the channel to the providers of the video signals.

Yet another alternative method for allocating bits in the transmission link to different channels provides a weighting factor $P^i$ for each encoder i and allocates bits proportionately according to the coding complexity values $X^i$, as weighted by the weighting factors $P^i$. (See equation (5)). As in the guaranteed minimum allocation method of equation (4), the weighting factors $P^i$ may depend on anticipated overall complexity of the video signal transmitted through the channel and/or pricing of the channel to the provider of the video signals.

$$R^i = \frac{P^i X^i}{\sum_{j=1}^{K} P^j X^j} (R) \quad (5)$$

A preferred method for allocating bits in the transmission link to different channels is a combination of the weighted allocation method of equation (5) and the guaranteed minimum allocation method of equation (4). In this method each channel is guaranteed a minimum allocation, and the remaining bits are allocated on a weighted proportion basis. (See equation (6)). As

$$R^i = RG^i + \frac{P^i X^i}{\sum_{j=1}^{K} P^j X^j} [R - \sum_{j=1}^{K} RG^j] \quad (6)$$

above, both the guaranteed minimum allocation and the weighting factors may depend upon the anticipated overall complexity of the video signal transmitted over the channel and/or pricing of the channel to the provider of the video signals.

It is possible to further refine the bit allocations $R^i$, in response to other parameters of the system. For example, it has been found that there is an upper bit rate allocation value above which no improvement in the quality of the reproduced image is visible. Thus, an allocation of bits in excess of this upper allocation value is wasteful of bits in the transmission link. Also, the operator of the transmission link may impose a maximum bit rate allocation $R_{max}$ (which can reflect the above upper bit rate allocation value) and/or a minimum bit rate allocation $R_{min}$ for each channel.

In addition, in order to minimize the potential for bit rate control oscillations and thus maximize bit rate control stability, there may be imposed a maximum increment of increase $\alpha$ and/or decrease $\beta$ in the bit rate allocation from one quota period to the next for a channel. As above, the values of the upper bit rate allocation value, the maximum and minimum bit rate allocations, and maximum increments of increase and decrease, may be different for the different channels, and may depend on the anticipated overall complexity of the video signal to be transmitted through this channel and/or the pricing of the channel to the provider of the video signals. In addition, it is possible for the maximum and minimum increments of increase and decrease to vary dynamically according to the degree of emptiness or fullness of the buffers in the channel.

Furthermore, the allocated bit rates may be further refined in order to provide buffer management, e.g. to

ensure that the output buffers of the CBR encoders 10 (of Fig. 1) and the input buffers of the corresponding receiver decoders (not shown) do not overflow or underflow. Explicit buffer management is not necessary if the encoder buffer size E is controlled as illustrated in inequality (7), where D is the fixed decoder buffer size. If the

$$E \le D\,\frac{R_{min}}{R_{max}} \qquad (7)$$

encoder buffer size is selected according to inequality (7), the bit rate allocation may vary from $R_{min}$ to $R_{max}$ without inducing overflow or underflow in either the encoder or decoder buffers. However, this method unduly limits the size of the encoder buffer, thus, unduly limiting the rate control flexibility.

An alternative buffer management scheme is adaptive and uses the current, instantaneous bit rates for buffer management, rather than the fixed parameters $R_{min}$ and $R_{max}$. Because the decoder buffer size was selected to be able to process data transmitted at the highest rate, $R_{max}$, the bit rate allocation can always be increased (to the system maximum, $R_{max}$) without overflowing the decoder buffer. However, there is an instantaneous minimum bit rate which must be maintained in order to assure that the data already in the encoder buffer gets transmitted to the decoder buffer before its decode time. Thus, a minimum bit rate allocation to ensure that the decoder buffer does not underflow must be dynamically calculated.

In dynamically calculating this minimum bit rate allocation, when decreasing the bit rate allocation, both a newly determined encoder buffer size, and the amount of data already placed in the encoder buffer in some preceding amount of time must be taken into account. The newly determined encoder buffer size for frame n, designated $E_n$, is determined in accordance with equation (8) in

$$E_n = \Delta\, R_{new} = \frac{R_{new}}{R_{max}}\, D \qquad (8)$$

which $\Delta$ is the system delay time, which a constant time delay between when a frame of video arrives at the encoder and when that frame is displayed at the decoder; D is the fixed decoder buffer size; and $R_{new}$ is the new proposed bit rate allocation. This buffer size ensures that in steady state at the new bit rate allocation, there will be no overflow or underflow in the encoder and decoder buffers.

However, as described above, if the newly proposed bit rate . allocation has been decreased, then there is a transition period, equal to the system delay time $\Delta$, in which there may be too many bits already in the encoder buffer to be transmitted successfully to the decoder at the new lower rate. One proposed method for refining the newly proposed bit rate allocation is first to examine the number of bits, designated e, actually placed into the encoder buffer (buffer fullness) for the number of preceding frames in the system delay time $\Delta$, designated $\Gamma$. Then the maximum buffer fullness number for the preceding $\Gamma$ frames (designated $e_{max\,\Gamma}$) is compared to the newly determined encoder buffer size $E_n$, from equation (8). The minimum reduced bit rate allocation $R_{reduced}$ for channel i which guarantees that all the bits from the preceding $\Gamma$ frames will be transmitted successfully to the receiver decoder, then, is given in equation (9).

$$R^{i}_{reduced} = \frac{e_{max\ \Gamma}}{\Delta} \qquad (9)$$

If such limits are imposed in a multiplexer system, then after bit rate allocations have been calculated according to equations (3), (4), (5) or (6), those bit rate allocations are checked to determine whether they fall within the current upper and lower limits for that channel. First, the upper and lower limits for each channel i are determined. The upper limit bit rate allocation for any quota period k (designated $R^i_{upper}[k]$) is the minimum of: the maximum permissible increased allocation over the previous quota period k-1; and the maximum bit rate allocation limit. (See equation (10)). The lower limit bit allocation for any quota period

$$R^{i}_{upper}[k] = \min\{\, R^{i}_{max},\ (1+\alpha)\, R^{i}\,[k\text{-}1]\,\} \qquad (10)$$

k, $R^i_{lower}[k]$, is the maximum of: the minimum bit rate allocation limit; the minimum permissible decreased allocation over the previous quota period k-1 and the minimum reduced bit rate allocation from equation (9). (See equation (11)). Then adjustments in the bit rate allocations for the channels are made.

$$R^{i}_{lower}[k] = \max\{R^{i}_{min}, (1 - \beta) R^{i}[k - 1], e_{max\ \Gamma}/\Delta\} \quad (11)$$

If the allocated bit rate for any channel exceeds either limiting value, the bit rate allocation for that channel is set to that limiting value, and the available remaining bit rate is reallocated among the other channels. For example, if the bit rate allocated to a channel i, as calculated in equation (3), (4), (5) or (6), is greater than the upper limit for that channel, as calculated in equation (10), then the bit rate for channel i is set to that upper limit $R^{i}_{upper}$. If, conversely, the bit rate is less than the lower limit calculated in equation (11), then the bit rate is set to that lower limit $R^{i}_{lower}$. (See equation (12)).

$$R^{i}[k] = \begin{cases} R^{i}_{lower}[k] & \text{if } R^{i}[k] < R^{i}_{lower}[k] \\ R^{i}_{upper}[k] & \text{if } R^{i}[k] > R^{i}_{upper}[k] \\ R^{i}[k] & \text{otherwise} \end{cases} \quad (12)$$

If any of the bit rate allocations are changed by the limiting operations of equations (10), (11) and (12), then the remaining available bit rate is reallocated among the non-limited channels in accordance with equation (3), (4), (5) or (6). Then these channels are again checked against the limits in equations (10), (11) and (12). This cycle is repeated until all bit rate allocations are finalized. In the above embodiment, the coding complexity period is the GOP period, determined picture by picture on a sliding window basis, which is of sufficient duration that changes in bit rate allocations in a channel from one quota period to the next should generally be relatively small. Consequently, equations (10), (11) and (12) should only rarely be invoked.

The timing of the coding complexity sampling and generation of updated bit rate quotas based on the coding complexities is complicated if the channels are operating with different GOP time periods. There are two approaches which yield accurate coding complexity sampling and bit rate quota allocation in this situation. In the first approach, a constant quota period is calculated in such a manner that each channel has an equal number of quota periods in each GOP. In this approach, the number of sample and quota periods per GOP may vary from channel to channel, but, for any channel, the number of such sample and quota periods within a GOP is constant. In the second approach, a sample is taken, and new allocation generated whenever any channel begins a new GOP, and the number of bits allocated in the new quota is calculated taking into account the length of the time period from the previous sample to the current sample.

Fig. 7 is a timing diagram illustrating the sampling and quota updates in a system using the first approach. In order to simplify the drawing, only two channels are illustrated. In Fig. 7, channel 1 is an example of a channel transmitting standard video having a frame rate of 30 frames per second (in the U.S.). Channel 2 is an example of a channel transmitting a film having a frame rate of 24 frames per second. Each of the channels is assumed to have 12 frames per GOP. Channel 1, thus, starts a new GOP every 0.4 seconds, or 2.5 GOPs per second, while channel 2 starts a new GOP every 0.5 seconds, or 2 GOPs per second. The sampling rate selected is one sample every 0.1 seconds. Thus, in channel 1, there are four sample and quota updates in every GOP, and in channel 2 there are five sample and quota updates in every GOP. The sampling times, $t_s$, are illustrated by vertical dashed lines. Because the time periods between samples $\Delta t$ is constant (0.1 seconds), equations (3) through (12), above, may be used without any modification in calculating the bit rate allocations for the next sample period. These bit rate allocations may be accumulated and used in the channel processors 10 (of Fig. 1) according to the known scheme termed the "token and leaky bucket" scheme.

Fig. 8 is a timing diagram illustrating the sampling of coding complexity values and quota updating in a system using the second approach, described above. The respective channels illustrated in Fig. 8 are carrying the same signals as in Fig. 7. In Fig. 8, samples of the coding complexity values from all the channels are taken whenever any channel begins a new GOP. New allocations are generated based on the values of those samples, and the time period $\Delta t$ since the last sample. These sample times are illustrated in Fig. 8 as vertical dashed lines t1 - t8, where t2, t3, t4, t6 and t8 correspond to starts of GOPs in channel 1, and t1, t3, t5 and t7 correspond to starts of GOPs in channel 2. Although t3 illustrates a sampling time corresponding to starts of GOPs in both channel I and 2, there is no requirement that such a time occur.

At each sample time, the current coding complexity values (from the preceding GOP, available picture by picture on a sliding window basis) in all the channels are sampled. Equations (3) through (12) may be used to calculate

the next bit rate quota proportions, but in determining the actual number of bits available to be allocated, the amount of time $\Delta t$ since the last sample must be taken into account. In order to properly compensate for the different sample periods, the total available bit rate R in equations (3) through (12) is replaced with the number of bits available for allocation, designated C, which is the product of the total available bit rate R and the sample period $\Delta t$, i.e. $C=R\Delta t$. The number of bits calculated by equations (3) through (12) are then allocated to the respective channel processors 10 (of Fig. 1) which, as above, use the "token and leaky bucket" scheme to accumulate and use the allocated bits. Either of the above two above approaches will accurately allocate bit rates to the respective channel processors 10 when the video signals from the different channels 5 have different GOP time periods.

The timing of the sampling of coding complexity values and the generation of updated bit rate quotas for the different channels may be simplified if all of the channels are operating at the same frame rate, and have the same number of frames in a GOP, i.e. all the channels have the same GOP time period, $GOP_{time}$. Fig. 6 is a timing diagram illustrating coding complexity sample and quota update timing in such a system. In Fig. 6, each horizontal line corresponds to a respective channel 1 - K. The short vertical lines extending upward from the horizontal lines represent the time when coding of an I frame is begun for that channel, which is considered to be the beginning of a GOP for that channel. The time period for a GOP, $GOP_{time}$, is equal in all of the channels, but, as can be seen, the beginning times of the GOPs for the respective channels are different. In fact, it has been found desirable to have different starting times for the GOPs for the respective channels so that coding of I frames do not overlap. This increases the complexity variations across the different channels.

It has been found that so long as the same number of I frames, P frames, and B frames are taken into account in calculating the coding complexity value, it does not matter that those frames come from different GOPs. Thus, as shown by the solid lines extending across all the channel's time axes, a coding complexity value sample may be taken simultaneously from all the channels at any time within a GOP. Updates of the bit rate quotas for all of the channels may then be generated from that sample and transmitted back to the channel processors 10 (of Fig. 1).

The above multiplexer system has been described as a collocated system. However, the plurality 10 of channel processors could reside in remote locations from the bit rate allocator 30 and the multiplexer 20. In such a system, communication links would be established between the encoders and the bit rate allocator. In this case, some portion of the bits transmitted between the processors 10 and the multiplexes could be dedicated to transmission of complexity information from the processors.

## Claims

**1.** A digital communications system, comprising:

- a plurality of information signal sources (5);
- a digital communications channel (15,20) having a maximum bit rate sharable among the plurality of information signal sources (30);
- a plurality of need analyzers (10,16), associated with respective information signal sources (5), comprising circuitry for dynamically generating respective signals (COMPLEXITY), each representing the relative need for bit rate in the channel by the associated signal source (5);
- a plurality of digital encoders (10,14), associated with respective signal sources (5), comprising circuitry for encoding the associated information signal to a digital signal having a bit rate set in response to a bit rate allocation signal (CONTROL); and
- a bit rate allocator (30), comprising circuitry for dynamically generating respective bit rate allocation signals (CONTROL) representing allocated bit rates, in response to the plurality of need representative signals (COMPLEXITY) from the need analyzers (10,16);

**characterized by**:

- signal source (5) being assigned a respective predetermined minimum bit rate; and
- the bit rate allocator comprising circuitry for generating the respective bit rate allocation signals such that a signal source (5) is allocated its assigned predetermined minimum bit rate, and further allocated a proportion of a remaining channel bit rate, the remaining channel bit rate being equal to the maximum channel bit rate less the previously allocated predetermined minimum bit rates, the further allocated proportion being equal to the proportion of the need represented by the need representative signal (COMPLEXITY) associated with that signal source (5) to the combined need represented by all the need representative signals (COMPLEXITY).

**2.** The system of claim 1, **characterized in that**:

- each signal source (5) is assigned a respective predetermined weighting factor; and
- the bit rate allocator (30) comprises further circuitry which generates respective bit rate allocation signals (CONTROL) such that a signal source (5) is allocated a proportion of the remaining channel bit rate equal to the proportion of the need represented by the need representative signal (COMPLEXITY) associated with this signal source (5) to the combined need represented by all the need representative signals (COMPLEXITY), weighted by the predetermined weighting factor assigned to the associated signal source (5).

**3.** The system of claim 1, **characterized in that**:

- each signal source (5) is assigned a respective predetermined maximum bit rate allocation limit; and
- the bit rate allocator (30), comprises circuitry which, after generating respective bit rate allocation signals (CONTROL), compares the respective bit rate allocations to the respective predetermined bit rate allocation limits, and if a bit rate allocation exceeds an assigned predetermined maximum bit rate allocation limit, generates an allocation signal (CONTROL) representing the predetermined bit rate allocation limit, instead of the previously generated bit rate allocation for the respective user.

**4.** The system of claim 1, **characterized in that**:

- each signal source (5) is assigned a respective predetermined bit rate allocation increment limit; and
- the bit rate allocator (30) comprises circuitry which, after generating respective bit rate allocation signals (CONTROL), compares the respective bit rate allocations to corresponding bit rate allocations represented by immediately preceding respective bit rate allocation signals (CONTROL) to determine respective bit rate allocation increments, and if a bit rate allocation increment exceeds an assigned predetermined bit rate allocation increment limit, generates an allocation signal (CONTROL) representing the bit rate allocation represented by immediately preceding bit rate allocation signal changed by the predetermined bit rate allocation increment limit, instead of the previously generated bit rate allocation for the respective signal source.

**5.** The system of claim 4, **characterized in that** the predetermined bit rate allocation increment limit is a maximum increment of increase of bit rate.

**6.** The system of claim 4, **characterized in that** the predetermined bit rate allocation increment limit is a maximum increment of decrease of bit rate.

**7.** The system of claim 1, **characterized in that**:

- the plurality of signal sources (5) are respective sources of video signals each video signal having successive frame time intervals;
- the plurality of need analyzers (10,16) comprise circuitry for estimating the complexity the image represented by the video signal from the associated video signal source (5) and for generating the need representative signals (COMPLEXITY) representing the estimated image complexity;
- the encoders (10,14) are MPEG encoders for encoding the associated video signal into an MPEG digitally encoded video signal having a group-of-pictures (GOP) time interval equal to an integral number of frame times of the associated video signal, and comprise circuitry responsive to the video signal from the associated video signal source (5) and the bit rate allocation signal from the bit rate allocator (30) for generating the MPEG encoded video signal substantially at the allocated bit rate; and
- the bit rate allocator (30) comprises circuitry for generating the respective bit rate allocation signals at successive allocation time intervals related to the GOP time intervals.

**8.** The system of claim 7 **characterized in that**:

- the respective GOP intervals are all equal; and
- the bit rate allocator (30) comprises circuitry for generating the respective bit rate allocation signals at an allocation time interval equal to the GOP time interval.

**9.** The system of claim 7 **characterized in that**:

- the respective GOP intervals are mutually different; and
- the bit rate allocator (30) comprises circuitry for generating the respective allocation signals at successive

allocation time intervals selected such that each of the respective GOP intervals has a respective constant integral number of allocation time intervals.

**10.** The system of claim 7 **characterized in that**:

- the respective GOP intervals are mutually different; and
- the bit rate allocator (30) comprises:
  - circuitry for generating the respective allocation signals at successive allocation time intervals aligned with each of the respective GOP time intervals generated by the MPEG encoders (10,14); and
  - circuitry for generating the bit rate allocation signals responsive to the duration of the preceding allocation time interval.

**Patentansprüche**

**1.** Digitales Kommunikationssystem mit:

- mehreren Informationssignalquellen (5),
- einem digitalen Kommunikationskanal (15, 20) mit einer maximalen Bitrate, die unter den mehreren Informationssignalquellen (30) aufteilbar ist,
- mehreren Bedarfs-Analysierern (10, 16) für die jeweiligen Informationssignalquellen (5) mit einer Schaltung zur dynamischen Erzeugung jeweiliger Signale (COMPLEXITY), von denen jedes den relativen Bedarf für die Bitrate in dem Kanal durch die zugehörige Signalquelle (5) darstellt,
- mehreren digitalen Codern (10, 14) für jeweilige Signalquellen (5) mit einer Schaltung zur Codierung des zugehörigen Informationssignals in ein digitales Signal mit einer Bitrate, die durch ein Bitraten-Zuordnungssignal (CONTROL) eingestellt ist, und
- einem Bitraten-Zuordner (30) mit einer Schaltung zur dynamischen Erzeugung jeweiliger Bitraten-Zuordnungssignale (CONTROL), die zugeordnete Bitraten, aufgrund der mehreren, den Bedarf darstellenden Signale (COMPLEXITY) von den Bedarfs-Analysierern (10, 16) darstellen,

**gekennzeichnet durch**:

- eine Signalquelle (5), die einer jeweiligen vorbestimmten minimalen Bitrate zugeordnet ist, und
- wobei der Bitraten-Zuordner eine Schaltung zur Erzeugung der jeweiligen Bitraten-Zuordnungssignale enthält, derart, dass einer Signalquelle (5) ihre zugeordnete vorbestimmte minimale Bitrate und außerdem ein Teil einer übrigen Kanalbitrate zugeordnet wird, die übrige Kanalbitrate gleich der maximalen Kanalbitrate, abzüglich der vorher zugeordneten vorbestimmten minimalen Bitraten, ist, dass der ferner zugeordnete Teil gleich dem Teil des Bedarfs ist, der **durch** das den Bedarf darstellende Signal (COMPLEXITY) der Signalquelle (5) zugeordnet wird, um mit dem Bedarf kombiniert zu werden, der **durch** alle den Bedarf darstellenden Signale (COMPLEXITY) dargestellt wird.

**2.** System nach Anspruch 1, **dadurch gekennzeichnet, dass**

- jeder Signalquelle (5) ein entsprechender, vorbestimmter Wichtungsfaktor zugeordnet ist und
- der Bitraten-Zuordner (30) außerdem eine Schaltung enthält, die jeweilige Bitraten-Zuordnungssignale (CONTROL) derart erzeugt, dass einer Signalquelle (5) ein Teil der übrigen Kanalbitrate zugeordnet wird, der gleich dem Teil des Bedarfs ist, der durch das den Bedarf darstellende Signal (COMPLEXITY) für diese Signalquelle (5) ist, um mit dem Bedarf kombiniert zu werden, der durch alle den Bedarf darstellenden Signale (COMPLEXITY) dargestellt wird, gewichtet durch den vorbestimmten Wichtungsfaktor für die zugehörige Signalquelle (5).

**3.** System nach Anspruch 1, **dadurch gekennzeichnet, dass:**

- jeder Signalquelle (5) eine jeweilige vorbestimmte maximale Bitraten-Zuordnungsgrenze zugeordnet ist und
- der Bitratenzuordner (30) eine Schaltung enthält, die nach der Erzeugung der jeweiligen Bitraten-Zuordnungssignale (CONTROL) die jeweiligen Bitratenzuordnungen mit den jeweiligen vorbestimmten Bitraten-Zuordnungsgrenzen vergleicht und dann, wenn eine Bitratenzuordnung eine zugeordnete, vorbestimmte, maximale

Bitraten-Zuordnungsgrenze übersteigt, ein Zuordnungssignal (CONTROL) erzeugt, das die vorbestimmte Bitraten-Zuordnungsgrenze anstelle der vorher erzeugten Bitratenzuordnung für den jeweiligen Benutzer anzeigt.

**4.** System nach Anspruch 1, **dadurch gekennzeichnet, dass:**

- jeder Signalquelle (5) eine jeweilige vorbestimmte Bitraten-Zuordnungs-Inkrementgrenz zugeordnet ist und
- der Bitraten-Zuordner (30) eine Schaltung enthält, die nach der Erzeugung der jeweiligen Bitraten-Zuordnungssignale (CONTROL) die jeweiligen Bitraten-Zuordnungen mit den entsprechenden Bitratenzuordnungen vergleicht, die durch die unmittelbar vorangehenden jeweiligen Bitraten-Zuordnungssignale (CONTROL) dargestellt werden, um jeweilige Bitraten-Zuordnungs-Inkremente zu bestimmen, und dann, wenn ein Bitraten-Zuordnungs-Inkrement eine zugeordnete vorbestimmte Bitraten-Zuordnungsinkrementierungs-Grenze übersteigt ein Zuordnungssignal (CONTROL) erzeugt, das die Bitraten-Zuordnung darstellt, die durch das unmittelbar vorangehende Bitraten-Zuordnungssignal dargestellt wird, geändert durch die vorbestimmte Bitraten-Zuordnungs-Inkrementgrenze, anstatt der vorher erzeugten Bitratenzuordnung für die jeweilige Signalquelle.

**5.** System nach Anspruch 4, **dadurch gekennzeichnet, dass** das vorbestimmte Bitraten-Zuordnungs-Inkrement ein maximales Inkrement der Zunahme der Bitrate ist.

**6.** System nach Anspruch 4, **dadurch gekennzeichnet, dass** die vorbestimmte Bitraten-Zuordnungs-Inkrement-Grenze ein maximales Inkrement der Abnahme der Bitrate ist

**7.** System nach Anspruch 1, **dadurch gekennzeichnet, dass:**

- die mehreren Signalquellen (5) jeweilige Videosignalquellen sind und jedes Videosignal aufeinanderfolgende Vollbild-Zeitintervalle aufweist,
- die mehreren Bedarfs-Analysierer (10, 16) eine Schaltung zur Schätzung der Komplexität des Bildes, das durch das Videosignal von der zugehörigen Videosignalquelle (5) dargestellt wird, und zum Erzeugen der den Bedarf darstellenden Signale (COMPLEXITY) enthalten, die die geschätzte Bildkomplexität darstellen,
- die Coder (10, 14) MPEG-Coder für die Codierung des zugehörigen Videosignals in ein digital codiertes MPEG-Videosignal sind, das eine Gruppe von Bild (GOP) Zeitintervall gleich einer ganzen Anzahl von Vollbildzeiten des zugehörigen Videosignals aufweist und eine Schaltung enthält, die auf das Videosignal von der zugehörigen Videosignalquelle (5) und das Bitraten-Zuordnungssignal von dem Bitraten-Zuordner (30) anspricht, zur Erzeugung des MPEG-codierten Videosignals im wesentlichen bei der zugeordneten Bitrate, und
- der Bitraten-Zuordner (30) eine Schaltung zur Erzeugung der jeweiligen Bitraten-Zuordnungssignale bei aufeinanderfolgenden Zuordnungs-Zeitintervallen für die GOP-Zeitintervalle, enthält.

**8.** System nach Anspruch 7, **dadurch gekennzeichnet, dass:**

- die jeweiligen GOP-Intervalle alle gleich sind, und
- der Bitraten-Zuordner (30) eine Schaltung zur Erzeugung der jeweiligen Bitraten-Zuordnungssignale bei einem Zuordnungs-Zeitintervall erzeugt, das gleich dem GOP-Zeitintervall ist.

**9.** System nach Anspruch 7, **dadurch gekennzeichnet, dass:**

- die jeweiligen GOP-Intervalle voneinander abweichen und
- der Bitraten-Zuordner (30) eine Schaltung zur Erzeugung der jeweiligen Zuordnungssignale bei aufeinanderfolgenden Zuordnungs-Zeitintervallen enthält, die so ausgewählt sind, dass jedes der jeweiligen GOP-Intervalle eine jeweilige konstante ganze Zahl von Zuordnungs-Zeitintervallen enthält.

**10.** System nach Anspruch 7, **dadurch gekennzeichnet, dass:**

- die jeweiligen GOP-Intervalle voneinander abweichen und
- der Bitraten-Zuordner (30) folgendes enthält:
    - eine Schaltung zur Erzeugung der jeweiligen Zuordnungssignale bei aufeinanderfolgenden Zuordnungs-Zeitintervallen, die mit jedem der jeweiligen GOP-Zeitintervalle ausgerichtet sind, die durch die MPEG-Coder (10, 14) erzeugt werden, und

- eine Schaltung zur Erzeugung der Bitraten-Zuordnungssignale aufgrund der Dauer des vorangehenden Zuordnungs-Zeitintervalls.

## Revendications

**1.** Système de communication numérique, comprenant :

- diverses sources de signaux d'informations (5) ;
- une voie de transmission numérique (15, 20) présentant un débit binaire maximal partageable entre les diverses sources de signaux d'informations (30) ;
- divers analyseurs de besoins (10, 16), associés aux sources de signaux d'informations correspondantes (5), comprenant des circuits de génération dynamique de signaux correspondants (COMPLEXITE), chacun représentant le besoin relatif en débit binaire dans la voie par la source de signaux associée (5) ;
- divers codeurs numériques (10, 14), associés aux sources de signaux correspondantes (5), comprenant des circuits de codage du signal d'informations associé en signal numérique présentant un débit binaire défini en réponse à un signal d'attribution de débit binaire (CONTRÔLE) ; et
- un attributeur de débit binaire (30), comprenant des circuits de génération dynamique de signaux d'attribution de débit binaire correspondants (CONTRÔLE) représentant des débits binaires attribués, en réponse aux divers signaux représentatifs de besoins (COMPLEXITE) provenant des analyseurs de besoins (10, 16) ;

**caractérisé par** :

- une source de signaux (5) à laquelle est attribué un débit binaire minimal prédéterminé correspondant ; et
- l'attributeur de débit binaire comprenant des circuits de génération des signaux d'attribution de débit binaire correspondants de sorte qu'une source de signaux (5) se voie attribuer son débit binaire minimal prédéterminé attribué, puis se voie attribuer une proportion d'un débit binaire de voie restant, le débit binaire de voie restant étant égal au débit binaire de voie maximal moins les débits binaires minimaux prédéterminés précédemment attribués, la proportion attribuée dans un second temps étant égale à la proportion du besoin représenté par le signal représentatif de besoins (COMPLEXITE) associé avec cette source de signaux (5) au besoin combiné représenté par tous les signaux représentatifs de besoins (COMPLEXITE).

**2.** Système de la revendication 1, **caractérisé en ce que** :

- chaque source de signaux (5) se voit attribuer un facteur de pondération prédéterminé correspondant ; et
- l'attribut de débit binaire (30) comprend d'autres circuits qui génèrent des signaux d'attribution de débit binaire correspondants (CONTRÔLE) de sorte qu'une source de signaux (5) se voie attribuer une proportion du débit binaire de voie restant égale à la proportion du besoin représenté par le signal représentatif de besoins (COMPLEXITE) associé avec cette source de signaux (5) au besoin combiné représenté par tous les signaux représentatifs de besoins (COMPLEXITE), pondérés par le facteur de pondération prédéterminé attribué à la source de signaux associée (5).

**3.** Système de la revendication 1, **caractérisé en ce que** :

- chaque source de signaux (5) se voit attribuer une limite d'attribution de débit binaire maximale prédéterminée correspondante ; et
- l'attributeur de débit binaire (30) comprend des circuits qui, après avoir généré des signaux d'attribution de débit binaire correspondants (CONTRÔLE), comparent les attributions de débit binaire correspondantes aux limites d'attribution de débit binaire prédéterminées correspondantes, et si une attribution de débit binaire dépasse une limite d'attribution de débit binaire maximale prédéterminée attribuée, génèrent un signal d'attribution (CONTRÔLE) représentant la limite d'attribution de débit binaire prédéterminée, au lieu de l'attribution de débit binaire préalablement générée pour l'utilisateur correspondant.

**4.** Système de la revendication 1, **caractérisé en ce que** :

- chaque source de signaux (5) se voit attribuer une limite d'incrémentation d'attribution de débit binaire prédéterminée correspondante ; et
- l'attributeur de débit binaire (30) comprend des circuits qui, après avoir généré des signaux d'attribution de débit binaire correspondants (CONTRÔLE), comparent les attributions de débit binaire correspondantes à des attributions de débit binaire correspondantes représentées par des signaux d'attribution de débit binaire correspondants immédiatement précédents (CONTRÔLE) pour déterminer des incrémentations d'attribution de débit binaire correspondantes, et si une incrémentation d'attribution de débit binaire dépasse une limite d'incrémentation d'attribution de débit binaire prédéterminée attribuée, génèrent un signal d'attribution (CONTRÔLE) représentant l'attribution de débit binaire représentée par un signal d'attribution de débit binaire immédiatement précédent modifié par la limite d'incrémentation d'attribution de débit binaire prédéterminée, au lieu de l'attribution de débit binaire préalablement générée pour la source de signaux correspondante.

**5.** Système de la revendication 4, **caractérisé en ce que** la limite d'incrémentation d'attribution de débit binaire prédéterminée est une incrémentation maximale d'augmentation de débit binaire.

**6.** Système de la revendication 4, **caractérisé en ce que** la limite d'incrémentation d'attribution de débit binaire prédéterminée est une incrémentation maximale de diminution de débit binaire.

**7.** Système de la revendication 1, **caractérisé en ce que** :

- les diverses sources de signaux (5) sont des sources de signaux vidéo correspondantes, chaque signal vidéo présentant des intervalles de temps d'image successifs ;
- les divers analyseurs de besoins (10, 16) comprennent des circuits pour estimer la complexité de l'image représentée par le signal vidéo provenant de la source de signaux vidéo associée (5) et pour générer les signaux représentatifs de besoins (COMPLEXITE) représentant la complexité d'image estimée ;
- les codeurs (10, 14) sont des codeurs MPEG permettant de coder le signal vidéo associé en signal vidéo à codage numérique MPEG présentant un intervalle de temps de groupe d'images égal à un nombre entier de temps d'image du signal vidéo associé, et comportent des circuits répondant au signal vidéo provenant de la source de signaux vidéo associée (5) et au signal d'attribution de débit binaire provenant de l'attributeur de débit binaire (30) pour générer le signal vidéo codé MPEG en grande partie au débit binaire attribué ; et
- l'attributeur de débit binaire (30) comprend des circuits permettant de générer les signaux d'attribution de débit binaire correspondants à des intervalles de temps d'attribution successifs liés aux intervalles de temps de groupe d'images.

**8.** Système de la revendication 7 **caractérisé en ce que** :

- les intervalles de groupe d'images correspondants sont tous égaux ; et
- l'attributeur de débit binaire (30) comprend des circuits permettant de générer les signaux d'attribution de débit binaire correspondants à un intervalle de temps d'attribution égal à l'intervalle de temps de groupe d'images.

**9.** Système de la revendication 7 **caractérisé en ce que** :

- les intervalles de groups d'images correspondants sont mutuellement différents ; et
- l'attributeur de débit binaire (30) comprend des circuits permettant de générer les signaux d'attribution correspondants à des intervalles de temps d'attribution successifs sélectionnés de sorte que chacun des intervalles de groupe d'images correspondants présente un nombre entier constant correspondant d'intervalles de temps d'attribution.

**10.** Système de la revendication 7 **caractérisé en ce que** :

- les intervalles de groupe d'images correspondants sont mutuellement différents ; et
- l'attribut de débit binaire (30) comprend :
  - des circuits permettant de générer les signaux d'attribution correspondants à des intervalles de temps d'attribution successifs alignés avec chacun des intervalles de temps de groupe d'images correspondants générés par les codeurs MPEG (10, 14) ; et

- des circuits permettant de générer les signaux d'attribution de débit binaire répondant à la durée de l'intervalle de temps d'attribution précédent.

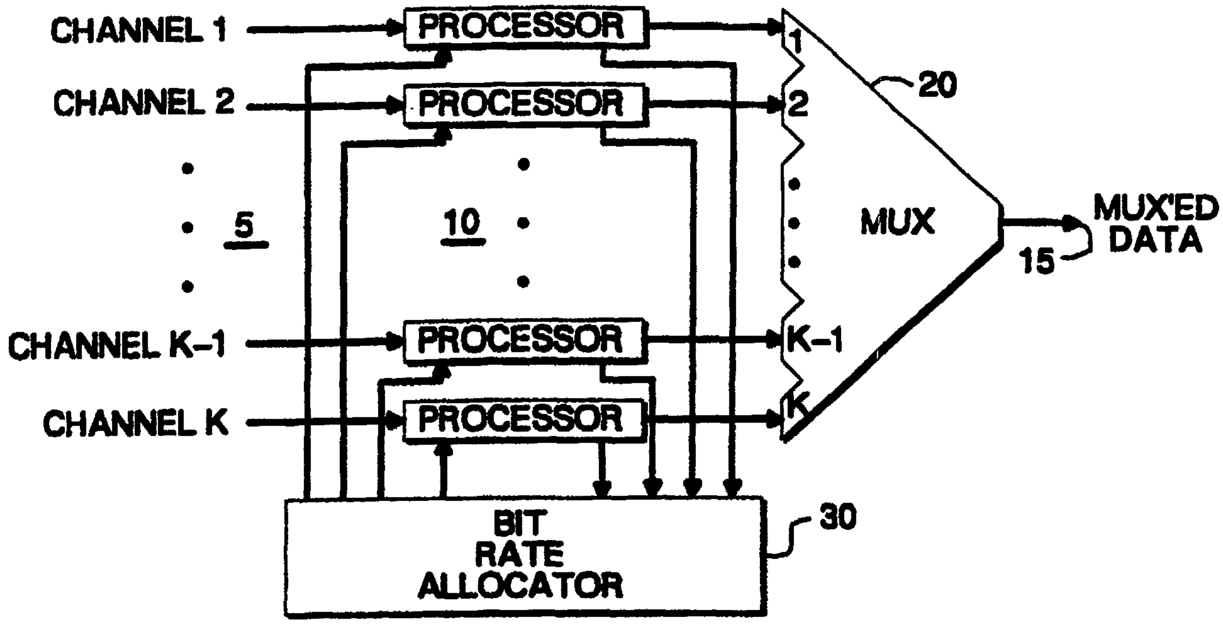
CHANNEL 1
CHANNEL 2
CHANNEL K–1
CHANNEL K
PROCESSOR
PROCESSOR
PROCESSOR
PROCESSOR
5
10
1
2
K–1
K
MUX
20
MUX'ED DATA
15
BIT RATE ALLOCATOR
30

FIG.1

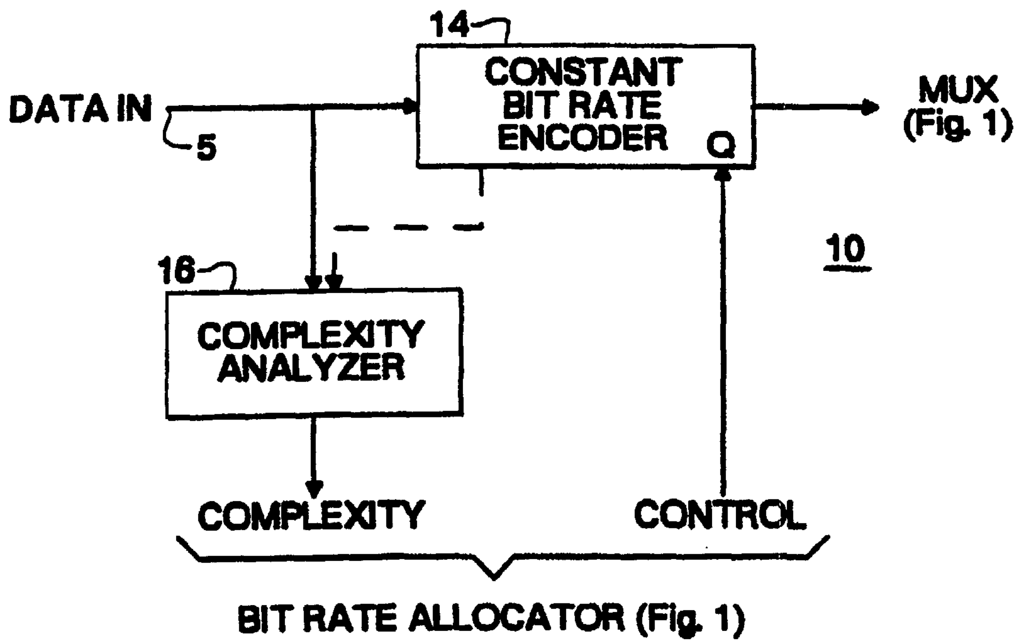
14
DATA IN
5
CONSTANT BIT RATE ENCODER
Q
MUX (Fig. 1)
10
16
COMPLEXITY ANALYZER
COMPLEXITY
CONTROL
BIT RATE ALLOCATOR (Fig. 1)

FIG. 2

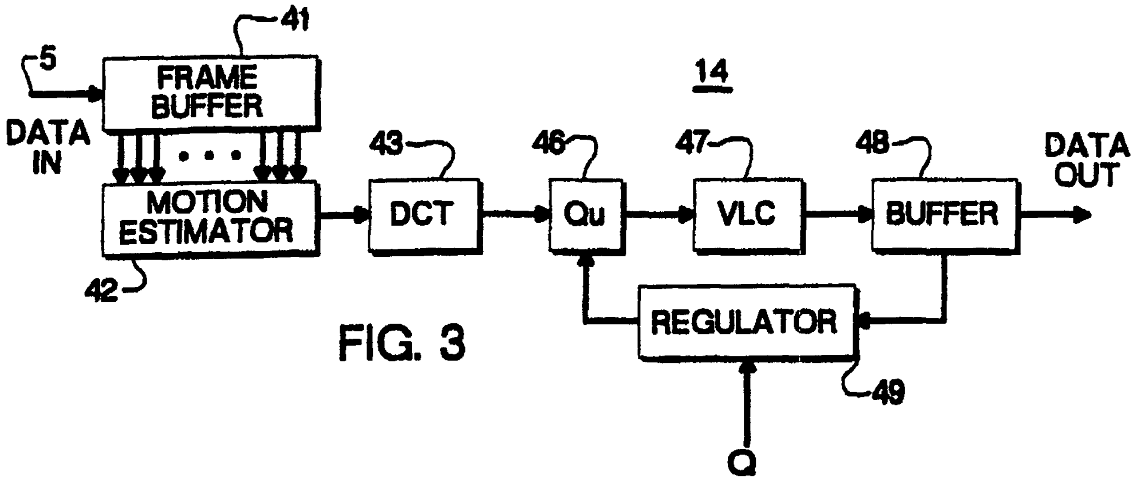


FIG. 3

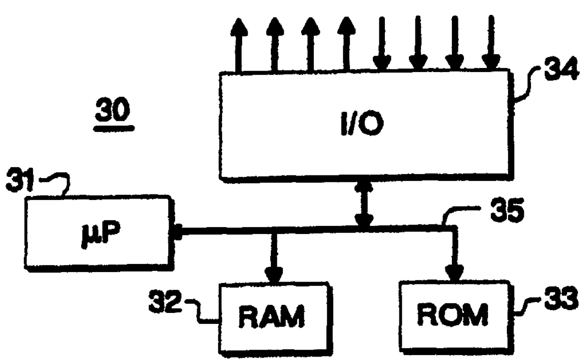


FIG. 4

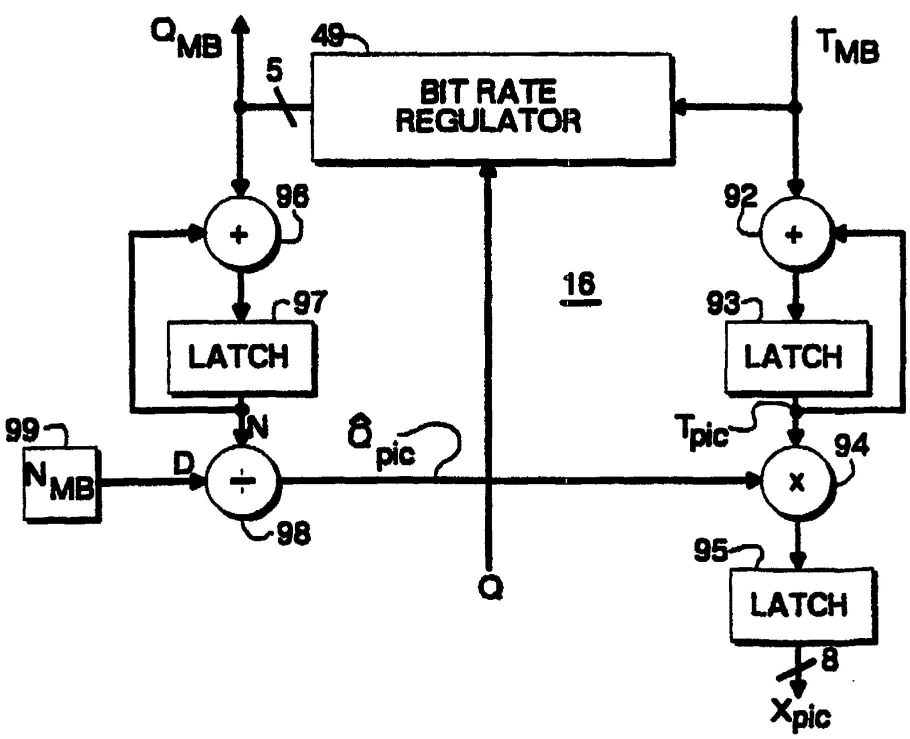


FIG. 5

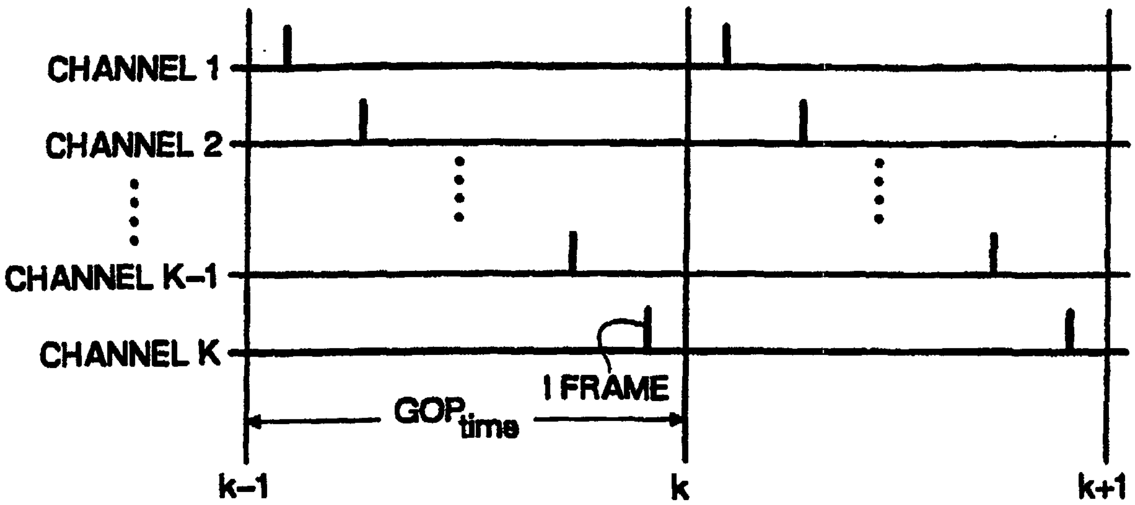


FIG. 6

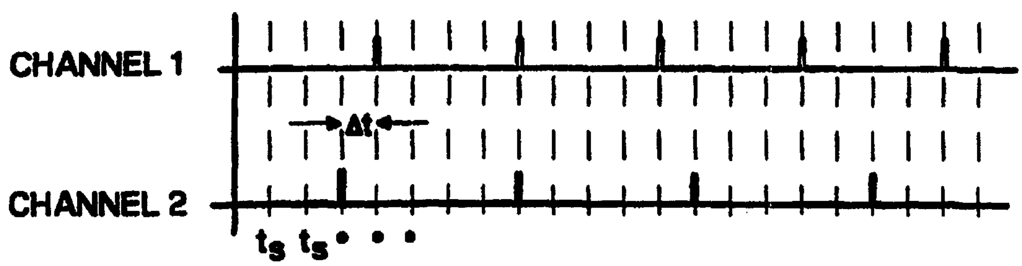


FIG. 7

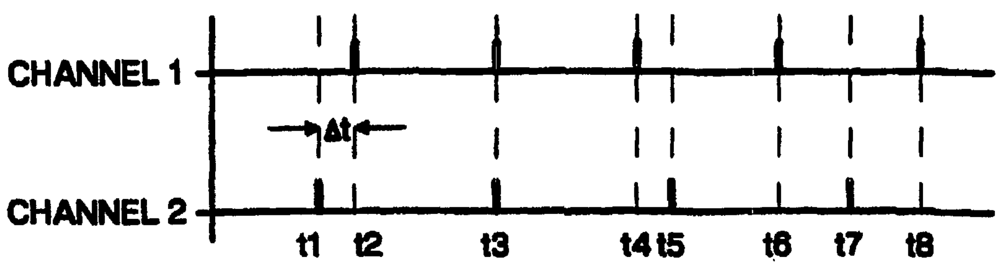


FIG. 8